# EUROPEAN PATENT APPLICATION

(11) **EP 3 742 386 A1**
(43) Date of publication of application: **25.11.2020**
(21) Application number: 20175911.5
(22) Date of filing: 21.05.2020
(51) Int. Cl.: G06T 3/00

(54) **IMAGE PROCESSING METHOD AND TRANSMISSION ELECTRON MICROSCOPE**

(30) Priority: 23.05.2019 JP 2019096771
(71) Applicant: Jeol Ltd., Akishima-shi, Tokyo 196-8558 (JP)
(72) Inventor: IKEDA, Yuta, Akishima, Tokyo 196-8558 (JP); HARUTA, Tomohiro, Akishima, Tokyo 196-8558 (JP); ICHIKAWA, Katsunori, Akishima, Tokyo 196-8558 (JP); FUKUDA, Tomohisa, Akishima, Tokyo 196-8558 (JP); KONYUBA, Yuji, Akishima, Tokyo 196-8558 (JP)
(74) Representative: Boult Wade Tennant LLP

(57) **Abstract**

An image processing method includes: acquiring an optical microscope image of a specimen; acquiring a transmission electron microscope image of the specimen having been thinned; and superimposing the optical microscope image on the transmission electron microscope image and causing a display section (36) to display the superimposed images, and in superimposing the optical microscope image on the transmission electron microscope image and causing the display section (36) to display the superimposed images, the optical microscope image is distorted to match a field of view of the optical microscope image with a field of view of the transmission electron microscope image.

## Description

### BACKGROUND OF THE INVENTION

The present invention relates to an image processing method and a transmission electron microscope.

Methods that enable a same location of a specimen to be observed with an optical microscope and an electron microscope are known. For example, JP-A-8-162059 discloses an apparatus which, in an electron microscope and an optical microscope for observing a defect on a specimen, adjusts a magnification of an electron microscope image and a magnification of an optical microscope image to equal each other and adjusts a position of the electron microscope image and a position of the optical microscope image to have matching positional relationships in order to display the electron microscope image and the optical microscope image in a superimposed manner on a same display screen.

When observing, with a transmission electron microscope, a specimen observed with an optical microscope, the specimen must be thinned using a microtome or the like. However, since thinning a specimen causes distortion in the specimen, even when an optical microscope image is superimposed on a transmission electron microscope image and displayed on a same screen, a deviation is created.

### SUMMARY

According to a first aspect of the invention, there is provided an image processing method including:
acquiring an optical microscope image of a specimen;
acquiring a transmission electron microscope image of the specimen having been thinned;
superimposing the optical microscope image on the transmission electron microscope image and causing a display section to display the superimposed images,
in superimposing the optical microscope image on the transmission electron microscope image and causing the display section to display the superimposed images, the optical microscope image being distorted to match a field of view of the optical microscope image with a field of view of the transmission electron microscope image.

According to a second aspect of the invention, there is provided a transmission electron microscope including:
an optical microscope image acquiring section which acquires an optical microscope image of a specimen;
a transmission electron microscope image acquiring section which acquires a transmission electron microscope image of the specimen having been thinned; and
a display control section which superimposes the optical microscope image on the transmission electron microscope image and causes a display section to display the superimposed images,
the display control section distorting the optical microscope image to match a field of view of the optical microscope image with a field of view of the transmission electron microscope image.

### BRIEF DESCRIPTION OF THE SEVERAL VIEWS OF THE DRAWING

FIG. 1 is a diagram illustrating a configuration of a transmission electron microscope according to an embodiment of the invention.
FIG. 2 is a functional block diagram illustrating a configuration of an image processing device.
FIG. 3 is a diagram illustrating a configuration of a biological microscope.
FIG. 4 is a diagram schematically illustrating an image series photographed by a biological microscope.
FIG. 5 is a diagram schematically illustrating an image series photographed by a fluorescence microscope.
FIG. 6 is a diagram schematically illustrating a TEM image photographed by a transmission electron microscope.
FIG. 7 is a diagram schematically illustrating a UI screen of a transmission electron microscope.
FIG. 8 is a diagram schematically illustrating a UI screen of the transmission electron microscope.
FIG. 9 is a diagram schematically illustrating a UI screen of the transmission electron microscope.
FIG. 10 is a diagram schematically illustrating a UI screen of the transmission electron microscope.
FIG. 11 is a diagram schematically illustrating a UI screen of the transmission electron microscope.
FIG. 12 is a diagram schematically illustrating a UI screen of the transmission electron microscope.
FIG. 13 is a diagram schematically illustrating a UI screen of the transmission electron microscope.
FIG. 14 is a diagram schematically illustrating a UI screen of the transmission electron microscope.
FIG. 15 is a diagram for illustrating an example of a method of superimposing an OM image on a TEM image and displaying the superimposed images.
FIG. 16 is a diagram for illustrating an example of a method of superimposing an OM image on a TEM image and displaying the superimposed images.
FIG. 17 is a diagram for illustrating an example of a method of superimposing an OM image on a TEM image and displaying the superimposed images.
FIG. 18 is a diagram for illustrating an example of a method of superimposing an OM image on a TEM image and displaying the superimposed images.
FIG. 19 is a diagram for illustrating an example of a method of superimposing an OM image on a TEM image and displaying the superimposed images.
FIG. 20 is a diagram for illustrating an example of a method of superimposing an OM image on a TEM image and displaying the superimposed images.
FIG. 21 is a diagram for illustrating an example of a method of superimposing an OM image on a TEM image and displaying the superimposed images.
FIG. 22 is a diagram for illustrating an example of a method of superimposing an OM image on a TEM image and displaying the superimposed images.
FIG. 23 is a diagram for illustrating an example of a method of superimposing an OM image on a TEM image and displaying the superimposed images.
FIG. 24 is a diagram for illustrating an example of a method of superimposing an OM image on a TEM image and displaying the superimposed images.
FIG. 25 is a flow chart illustrating an example of processing by a processing section of the transmission electron microscope according to an embodiment of the invention.

### DETAILED DESCRIPTION OF THE EMBODIMENT

(1) According to an embodiment of the invention, there is provided an image processing method including:
   acquiring an optical microscope image of a specimen;
   acquiring a transmission electron microscope image of the specimen having been thinned;
   superimposing the optical microscope image on the transmission electron microscope image and causing a display section to display the superimposed images,
   in superimposing the optical microscope image on the transmission electron microscope image and causing the display section to display the superimposed images, the optical microscope image being distorted to match a field of view of the optical microscope image with a field of view of the transmission electron microscope image.
   With such an image processing method, since the optical microscope image is distorted to match a field of view of the optical microscope image with a field of view of the transmission electron microscope image, a deviation due to a distortion of a specimen caused by thinning can be reduced when displaying the optical microscope image and the transmission electron microscope image in a superimposed manner.
(2) According to an embodiment of the invention, there is provided a transmission electron microscope including:
   an optical microscope image acquiring section which acquires an optical microscope image of a specimen;
   a transmission electron microscope image acquiring section which acquires a transmission electron microscope image of the specimen having been thinned; and
   a display control section which superimposes the optical microscope image on the transmission electron microscope image and causes a display section to display the superimposed images,
   the display control section distorting the optical microscope image to match a field of view of the optical microscope image with a field of view of the transmission electron microscope image.

With such a transmission electron microscope, since the optical microscope image is distorted to match a field of view of the optical microscope image with a field of view of the transmission electron microscope image, a deviation due to a distortion of a specimen caused by thinning can be reduced when displaying the optical microscope image and the transmission electron microscope image in a superimposed manner.

Hereinafter, preferred embodiments of the invention will be described in detail with reference to the drawings. It is noted that the embodiments described below do not unduly limit the scope of the invention as stated in the claims. In addition, all of the elements described below are not necessarily essential requirements of the invention.

### 1. Transmission Electron Microscope

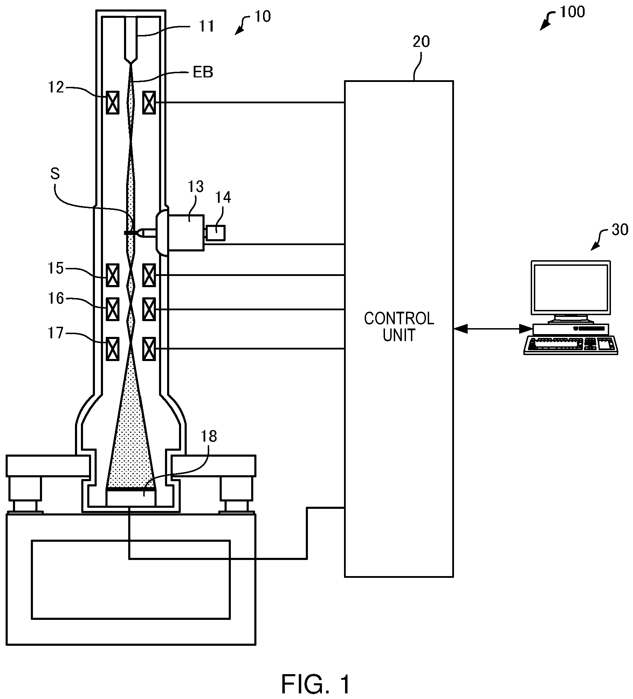

First, a transmission electron microscope according to an embodiment of the invention will be described with reference to the drawings. FIG. 1 is a diagram illustrating a configuration of a transmission electron microscope 100 according to an embodiment of the invention.

As illustrated in FIG. 1, the transmission electron microscope 100 includes an electron microscope body 10, a control unit 20, and an image processing device 30. The transmission electron microscope 100 is a transmission electron microscope (TEM). Alternatively, the transmission electron microscope 100 may be a scanning transmission electron microscope (STEM).

The electron microscope body 10 includes an electron source 11, an illumination lens 12, a specimen stage 13, a specimen holder 14, an objective lens 15, an intermediate lens 16, a projector lens 17, and an imaging device 18.

The electron source 11 generates electrons. The electron source 11 is, for example, an electron gun which accelerates electrons emitted from a cathode by an anode and which emits an electron beam EB.

The illumination lens 12 causes the electron beam EB emitted from the electron source 11 to converge and irradiates a specimen S with the converged electron beam EB. Although not illustrated, the illumination lens 12 may be constituted by a plurality of electron lenses.

The specimen stage 13 holds the specimen S. In the illustrated example, the specimen stage 13 holds the specimen S via the specimen holder 14. The specimen stage 13 includes a drive mechanism for performing operations such as an operation of moving the specimen S in horizontal directions (an X-axis direction and a Y-axis direction), an operation of moving the specimen S in a vertical direction (a Z-axis direction), and an operation of tilting the specimen S. The specimen S can be positioned using the specimen stage 13.

The objective lens 15 is a first-stage lens for forming a transmission electron microscope image (a TEM image) with the electron beam EB transmitted through the specimen S.

The intermediate lens 16 and the projector lens 17 enlarge the image formed by the objective lens 15 and form an image on the imaging device 18. The objective lens 15, the intermediate lens 16, and the projector lens 17 constitute an imaging system of the electron microscope body 10.

The imaging device 18 photographs a TEM image formed by the imaging system. For example, the imaging device 18 is a digital camera such as a charged-coupled device (CCD) camera or a complementary metal-oxide-semiconductor (CMOS) camera. The imaging device 18 sends the photographed TEM image to the control unit 20.

In the electron microscope body 10, the electron beam EB emitted from the electron source 11 is focused by the illumination lens 12 and irradiates the specimen S. The electron beam EB irradiating the specimen S is transmitted through the specimen S and an image is formed by the objective lens 15. A TEM image formed by the objective lens 15 is further enlarged by the intermediate lens 16 and the projector lens 17 and photographed by the imaging device 18. The TEM image photographed by the imaging device 18 is sent to the control unit 20.

The control unit 20 controls the respective sections of the electron microscope body 10. In addition, the control unit 20 receives the TEM image from the imaging device 18 and sends the TEM image together with photographic condition information to the image processing device 30. The photographic condition information includes magnification information and specimen position information.

The magnification information refers to information on a magnification at the time of photography of the TEM image. Alternatively, the control unit 20 may have correction information for correcting the magnification at the time of photography of the TEM image, and the magnification information may be a magnification corrected using the correction information.

The specimen position information refers to information on a specimen position where the TEM image had been photographed. The specimen position is represented as, for example, coordinates in a specimen stage coordinate system on the specimen stage 13. The specimen stage coordinate system is a coordinate system for specifying each position on the specimen stage 13 and is, for example, an orthogonal coordinate system having two orthogonal coordinate axes (an X axis and a Y axis). When the electron microscope body 10 is configured to be capable of electromagnetically deflecting the electron beam EB and moving an observed field (for example, an image shift), the electromagnetic movement of the observed field is also reflected onto the specimen position information.

The photographic condition information may include information other than magnification information and specimen position information. For example, observation conditions may include information on an inclination of the specimen S and information on accelerating voltage.

The image processing device 30 receives a TEM image together with photographic condition information of the TEM image from the control unit 20 and causes the TEM image to be displayed on a display section. In addition, the image processing device 30 superimposes an optical microscope image (an OM image) photographed by the optical microscope onto a TEM image and causes the display section to display the superimposed images. Furthermore, the image processing device 30 is capable of acquiring an OM image and information on a specimen position at which the OM image had been photographed, operate the specimen stage 13 based on the specimen position information, and move the specimen S to a same specimen position as the OM image. Accordingly, a TEM image can be photographed at a same specimen position as the OM image.

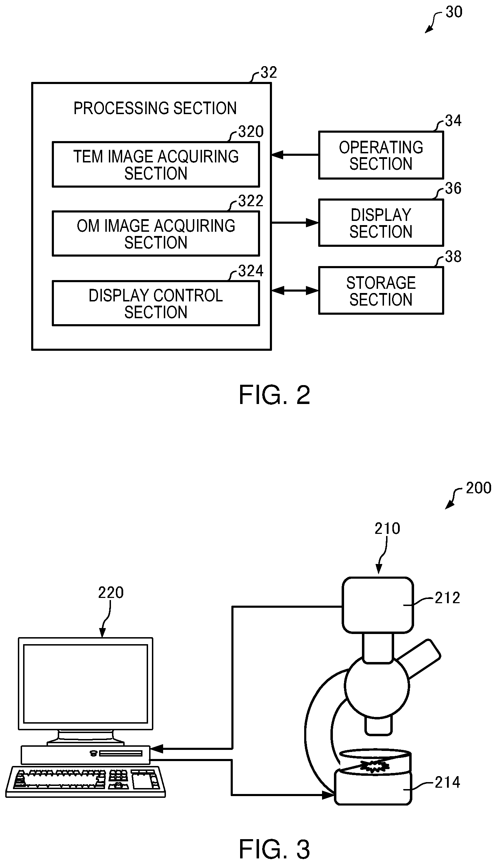

FIG. 2 is a functional block diagram illustrating a configuration of the image processing device 30.

As illustrated in FIG. 2, the image processing device 30 includes a processing section 32, an operating section 34, a display section 36, and a storage section 38.

The operating section 34 performs processing involving converting an instruction from a user into a signal and sending the signal to the processing section 32. For example, the operating section 34 is an input device such as a trackball, button, a key, a touch panel display, or a microphone.

The display section 36 outputs an image generated by the processing section 32. The display section 36 is a display such as a liquid crystal display (LCD).

The storage section 38 stores programs and data which enable the processing section 32 to perform various types of calculation processing and control processing. In addition, the storage section 38 is also used as a work area of the processing section 32. The storage section 38 is, for example, a random access memory (RAM), a read only memory (ROM), and a hard disk.

The processing section 32 performs processing for acquiring a TEM image and photographic condition information of the TEM image having been sent from the control unit 20, processing for acquiring an OM image and photographic condition information of the OM image, processing for superimposing the OM image on the TEM image and causing the display section 36 to display the superimposed images and the like. Functions of the processing section 32 can be realized by having various processors (a CPU and the like) execute the programs stored in the storage section 38. The processing section 32 includes a TEM image acquiring section 320, an OM image acquiring section 322, and a display control section 324.

The TEM image acquiring section 320 receives a TEM image photographed by the electron microscope body 10 and sent from the control unit 20 and photographic condition information. Accordingly, a TEM image and photographic condition information are acquired.

The OM image acquiring section 322 acquires an OM image. The OM image and photographic condition information are stored in, for example, the storage section 38. The OM image acquiring section 322 reads an OM image and photographic condition information stored in the storage section 38 and acquires the OM image and the photographic condition information.

The display control section 324 superimposes the TEM image acquired by the TEM image acquiring section 320 on the OM image acquired by the OM image acquiring section 322 and causes the display section 36 to display the superimposed images. The display control section 324 distorts the OM image to match a field of view of the OM image with a field of view of the TEM image.

### 2. Image Processing Method

Next, an image processing method according to an embodiment of the invention will be described.

An image processing method according to an embodiment of the invention includes: acquiring an OM image of a specimen; acquiring a TEM image of the specimen having been thinned; superimposing the OM image on the TEM image and causing the display section 36 to display the superimposed images, wherein in causing the display section 36 to display the superimposed images, the OM image is distorted to match a field of view of the OM image with a field of view of the TEM image.

An OM image is an image photographed by an optical microscope. For example, the optical microscope irradiates a specimen with light and focuses and observes light emitted by the specimen such as transmitted light, reflected light, or fluorescent light. Examples of the optical microscope include a metal microscope, a biological microscope, an inverted microscope, a differential interference microscope, and a fluorescence microscope.

Hereinafter, first, a method of photographing a biological specimen with a biological microscope, a method of photographing a specimen with a fluorescence microscope, and a method of photographing a specimen with a transmission electron microscope will be described.

### 2.1. Photography of OM Image Using Biological Microscope

First, a method of photographing an OM image with a biological microscope will be described.

FIG. 3 is a diagram illustrating a configuration of a biological microscope 200. The biological microscope 200 includes an optical microscope body 210 and a control computer 220.

The optical microscope body 210 includes an illumination device, an optical system, and an imaging device 212 for photographing an OM image. The imaging device 212 is, for example, a digital camera such as a CCD camera or a CMOS camera. The OM image photographed by the imaging device 212 is sent to the control computer 220.

The optical microscope body 210 further includes a drive mechanism 214 for operating a specimen stage. The drive mechanism 214 is controlled by the control computer 220.

The control computer 220 acquires the OM image photographed by the imaging device 212 and causes a storage section of the control computer 220 to store the OM image together with photographic condition information. The photographic condition information of the OM image includes magnification information and specimen position information.

The magnification information refers to information on a magnification at the time of photography of the OM image. For example, the magnification information is information on a pixel size of the OM image. The specimen position information refers to information on a specimen position where the OM image had been photographed. The specimen position is represented as, for example, coordinates in a specimen stage coordinate system on a specimen stage of the biological microscope 200. In addition, photographic condition information includes the number of pixels of the OM image.

In the biological microscope 200, for example, an image series of a specimen is photographed. An image series is a series of images photographed by a same microscope without removing a specimen from the specimen stage. Therefore, specimen positions are represented by a common coordinate system among images included in a same image series.

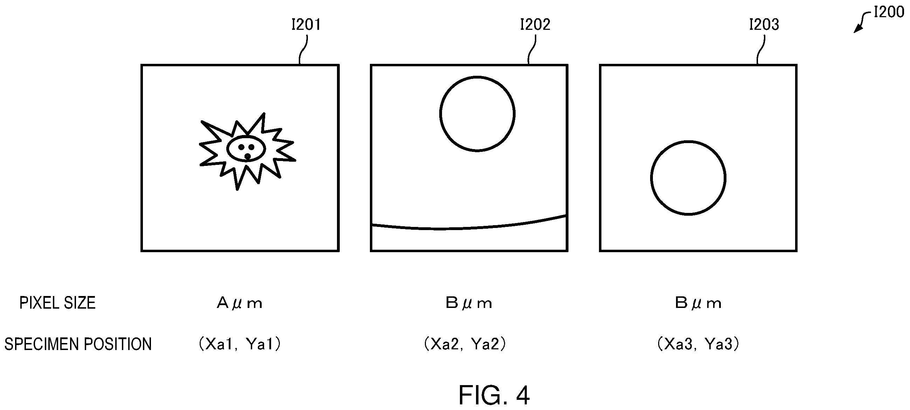

FIG. 4 is a diagram schematically illustrating an image series 1200 photographed by the biological microscope 200.

In the example illustrated in FIG. 4, the image series 1200 includes an OM image 1201, an OM image I202, and an OM image I203. The OM image I201 has a pixel size of A µm and a specimen position of (X, Y) = (Xa1, Ya1). The OM image I202 has a pixel size of B µm and a specimen position of (X, Y) = (Xa2, Ya2). The OM image I203 has a pixel size of B µm and a specimen position of (X, Y) = (Xa3, Ya3). Specimen positions are represented by, for example, coordinates of a center of a field of view.

When superimposing the image series 1200 photographed by the biological microscope 200 on a TEM image, the storage section 38 of the image processing device 30 is caused to store image data of the OM images constituting the image series 1200 and observation condition information.

### 2.2. Photography of OM Image Using Fluorescence Microscope

Next, a method of photographing a OM image with a fluorescence microscope will be described. With a fluorescence microscope, by labeling a specific cell or a specific protein using a fluorescent protein or a fluorescent dye, localization of a target cell or a target protein can be observed.

The fluorescence microscope has a similar configuration to the biological microscope 200 described above illustrated in FIG. 3 with the exception of, for example, irradiating a specimen only with light of a specific wavelength.

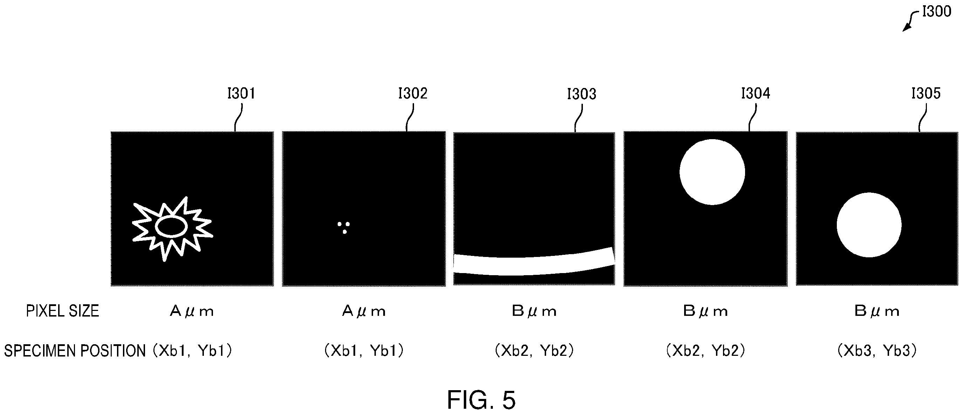

FIG. 5 is a diagram schematically illustrating an image series 1300 photographed by a fluorescence microscope.

In the example illustrated in FIG. 5, the image series 1300 includes an OM image I301, an OM image I302, an OM image 1303, an OM image I304, and an OM image I305. The OM image I301 and the OM image 1302 have a pixel size of A µm and a specimen position of (X, Y) = (Xb1, Yb1). Note that the OM image 1301 differs from the OM image I302 in wavelengths of light emitted by the specimen. The OM image I303 and the OM image I304 have a pixel size of B µm and a specimen position of (X, Y) = (Xb2, Yb2). Note that the OM image 1303 differ from the OM image I304 in wavelengths of light emitted by the specimen. The OM image 1305 has a pixel size of B µm and a specimen position of (X, Y) = (Xb3, Yb3).

When superimposing the image series 1300 photographed by the fluorescence microscope on a TEM image, the storage section 38 of the image processing device 30 is caused to store image data of the OM images constituting the image series 1300 and observation condition information.

### 2.3. Photography of TEM Image Using Transmission Electron Microscope

Next, a method of photographing a TEM image with a transmission electron microscope will be described. A specimen can be directly observed with optical microscopes such as the biological microscope and the fluorescence microscope described above. In contrast, when observing a specimen with a transmission electron microscope, the specimen must be thinned.

A specimen for a transmission electron microscope can be prepared by, for example, resin-embedding the specimen, thinning the resin-embedded specimen using a microtome or the like, and placing the thinned specimen strip on a grid for TEM. Note that a method of preparing a specimen for a transmission electron microscope is not limited thereto and various known methods can be used.

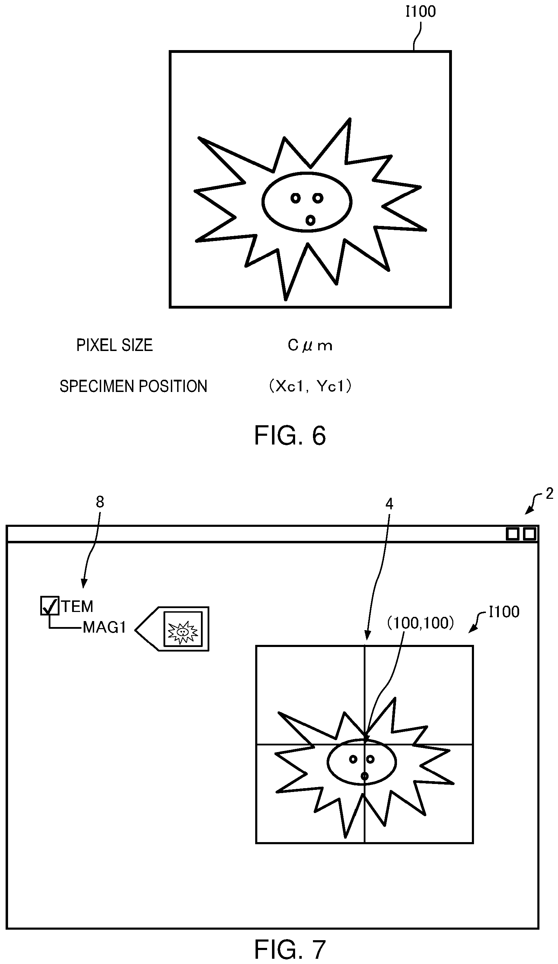

FIG. 6 is a diagram schematically illustrating a TEM image 1100 photographed by the transmission electron microscope 100.

In the example illustrated in FIG. 6, the TEM image I100 has a pixel size of C µm and a specimen position of (X, Y) = (Xc1, Yc1).

### 2.4. Image Processing

### 2.4.1. Basic Operation

Next, a basic operation of the display control section 324 of the image processing device 30 will be described with reference to the drawings.

FIGS. 7 to 14 are diagrams schematically illustrating a UI screen 2 of the transmission electron microscope 100.

An image display region 4 in which an image is to be displayed and a layer display region 8 showing information on layers of the image are displayed on the UI screen 2.

The UI screen 2 has a similar coordinate system to the coordinate system of the specimen stage 13 of the transmission electron microscope 100. For example, a horizontal direction of the UI screen 2 corresponds to the X-axis direction of the specimen stage 13 and a vertical direction of the UI screen 2 corresponds to the Y-axis direction of the specimen stage 13. In other words, when the specimen stage 13 is moved in the X-axis direction, a TEM image displayed on the UI screen 2 moves in the horizontal direction of the UI screen 2. In addition, when the specimen stage 13 is moved in the Y-axis direction, the TEM image displayed on the UI screen 2 moves in the vertical direction of the UI screen 2.

In FIG. 7, the TEM image I100 is displayed in the image display region 4. In the example illustrated in FIG. 7, a specimen position of the TEM image I100 is (X, Y) = (100, 100).

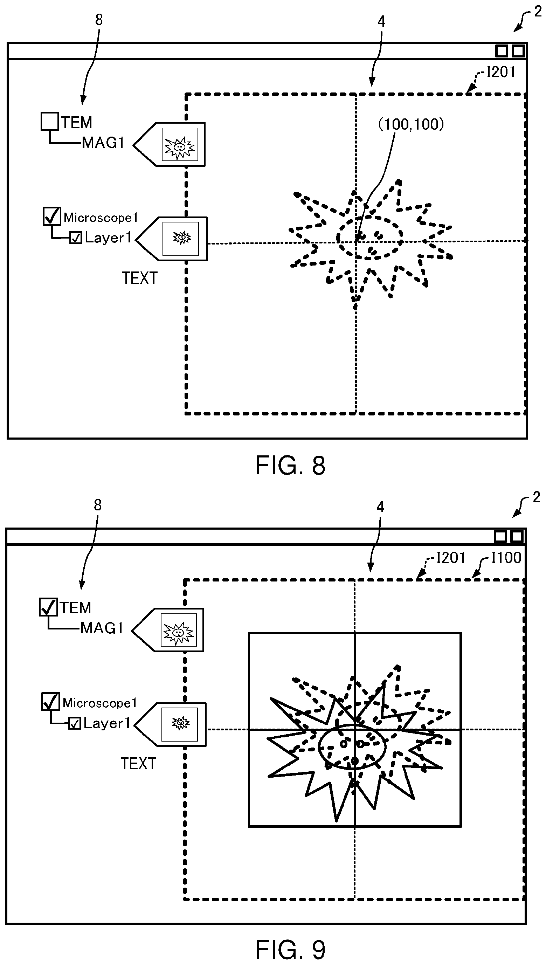

In FIG. 8, the TEM image 1100 is hidden and the OM image I201 is displayed as a layer 1 on the UI screen 2. In the example illustrated in FIG. 8, a specimen position of the OM image I201 is (X, Y) = (100, 100).

In FIG. 9, the OM image I201 and the TEM image 1100 are displayed in a state of being superimposed on each other. In this case, transmittance of the OM image 1201 is adjusted and the OM image 1201 is displayed in a state of being superimposed on the TEM image I100. The specimen position (X, Y) = (100, 100) of the OM image 1201 matches the specimen position (X, Y) = (100, 100) of the TEM image 1100. However, since it is difficult to completely match coordinates of the specimen position in the biological microscope 200 with coordinates of the specimen position in the transmission electron microscope 100, there is a deviation between the OM image 1201 and the TEM image I100 as illustrated in FIG. 9.

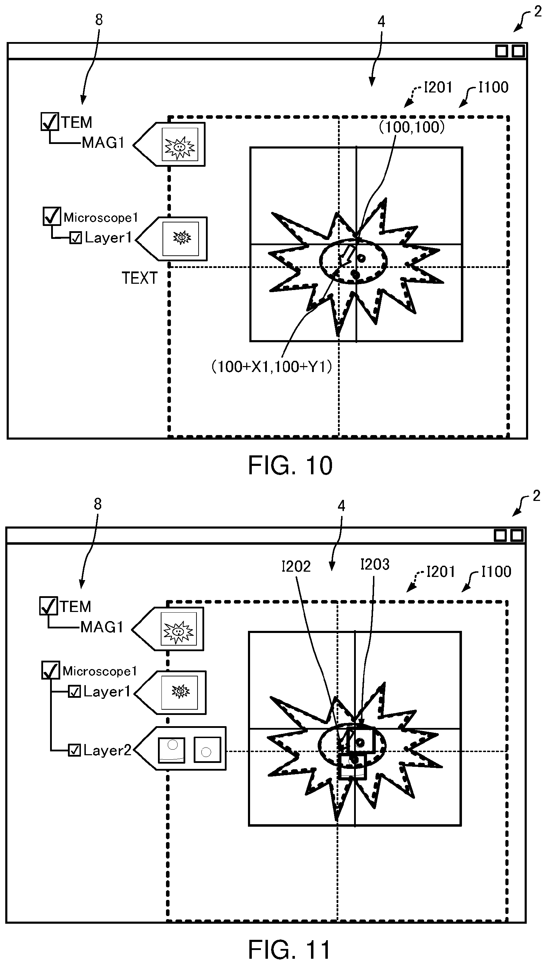

In FIG. 10, the OM image 1201 is translated and superimposed on the TEM image 1100. In FIG. 10, the OM image I201 is translated so as to move the specimen position of the OM image I201 to (X, Y) = (100 + X1, 100 + Y1). In this manner, coordinates are corrected with respect to the OM image 1201 to match coordinates of the specimen position in the biological microscope 200 with coordinates of the specimen position in the transmission electron microscope 100.

In FIG. 11, in the state illustrated in FIG. 10 where the OM image I201 is superimposed on the TEM image 1100, the OM image I202 and the OM image 1203 are further displayed in a superimposed manner. In this case, the OM image 1201 is considered a first layer and the OM image I202 and the OM image 1203 are considered a second layer.

In this case, the coordinate correction set in the OM image I201 is applied to the OM image I202 and the OM image I203. In other words, the OM image 1202 is displayed at a specimen position (X, Y) = (Xa2 + X1, Ya2 + Y1) and the OM image I203 is displayed at a specimen position (X, Y) = (Xa3 + X1, Ya3 + Y1). Therefore, the OM image I201 and the OM images I202 and I203 can be superimposed on the TEM image I100 in a state where a positional relationship of the specimen is maintained. In addition, based on a pixel size and the number of pixels of the OM image I201, a pixel size and the number of pixels of the OM image I202, and a pixel size and the number of pixels of the OM image I203, the OM image I202 and the OM image I203 can be displayed in an appropriate image size.

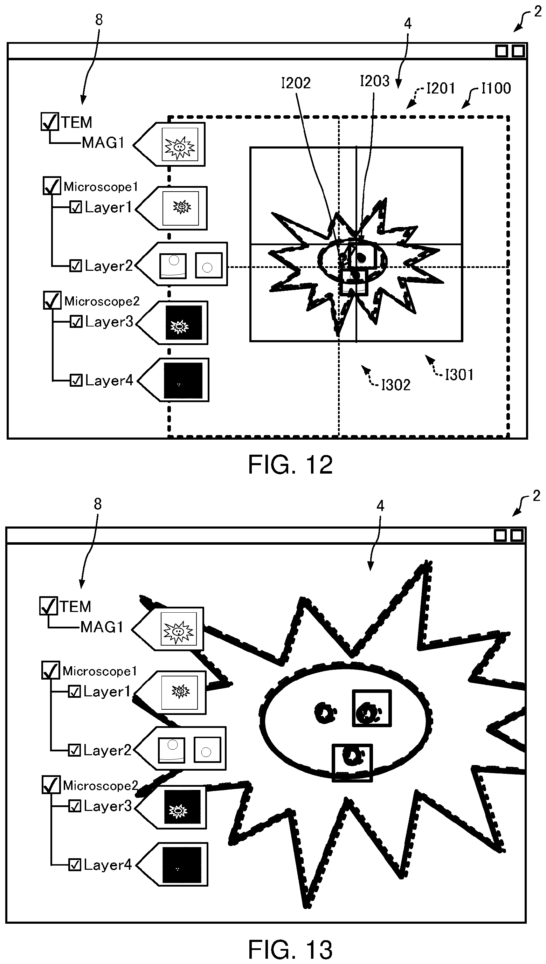

In FIG. 12, the OM image 1301 photographed by the fluorescence microscope is considered and displayed as a third layer and the OM image I302 photographed by the fluorescence microscope is considered and displayed as a fourth layer.

A specimen position of the OM image I301 is correcting using the same method as the OM image I201. In addition, a specimen position of the OM image I302 is corrected by applying the coordinate correction set in the OM image I301 to the OM image I302.

FIG. 13 illustrates a state where the image illustrated in FIG. 12 is digitally zoomed. As illustrated in FIG. 13, the image displayed on the UI screen 2 can be digitally zoomed in a state where relationships of positions and magnifications are mutually maintained.

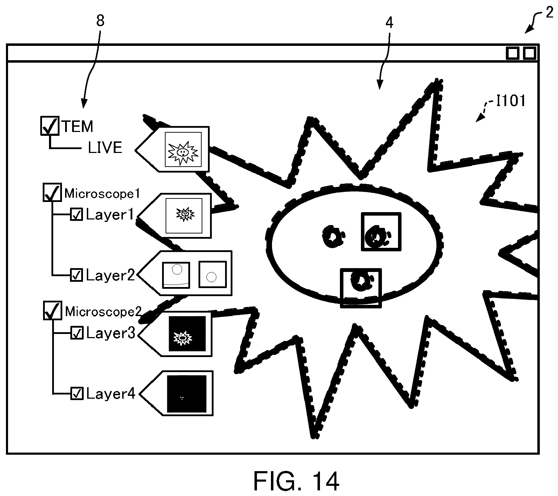

In FIG. 14, in place of the TEM image I100, a live image I101 of the TEM image photographed by the transmission electron microscope 100 is displayed on the UI screen 2. In other words, the TEM image photographed by the transmission electron microscope 100 is displayed in real-time on the UI screen 2. In this manner, the live image I101 can be displayed superimposed on an OM image.

When the TEM image rotates in accordance with observation magnification, the TEM image is rotated by an image rotation angle in accordance with each observation magnification. Accordingly, even when the observation magnification is changed, an OM image and a TEM image can be displayed in a state of being superimposed on each other.

### 2.4.2. Distortion Correction

As described above, after a specimen is observed by an optical microscope, the specimen is thinned and processed into a specimen for TEM. Due to the thinning, a distortion occurs in the specimen. Therefore, when displaying an OM image and a TEM image in an superimposed manner, a field of view of the OM image cannot be matched with a field of view of the TEM image unless the distortion is corrected. In consideration thereof, in the present embodiment, the OM image is distorted to match the field of view of the OM image with the field of view of the TEM image.

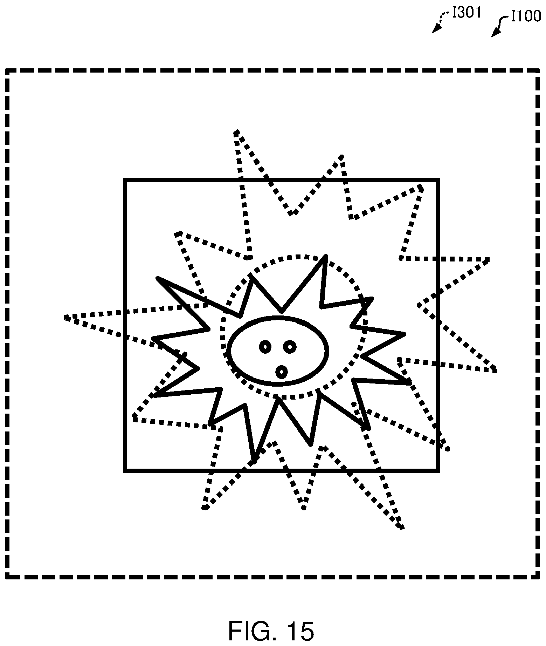

FIGS. 15 to 24 are diagrams for illustrating an example of a method of superimposing an OM image on a TEM image and displaying the superimposed images. Hereinafter, a case where the OM image I301 is displayed superimposed on the TEM image 1100 will be described.

First, as illustrated in FIG. 15, the OM image I301 and the TEM image I100 are displayed on the UI screen 2 of the display section 36. In this case, based on observation condition information of the TEM image 1100 and observation condition information of the OM image, a position and a size at which the TEM image I100 is to be displayed and a position and a size at which the OM image 1301 is to be displayed are determined.

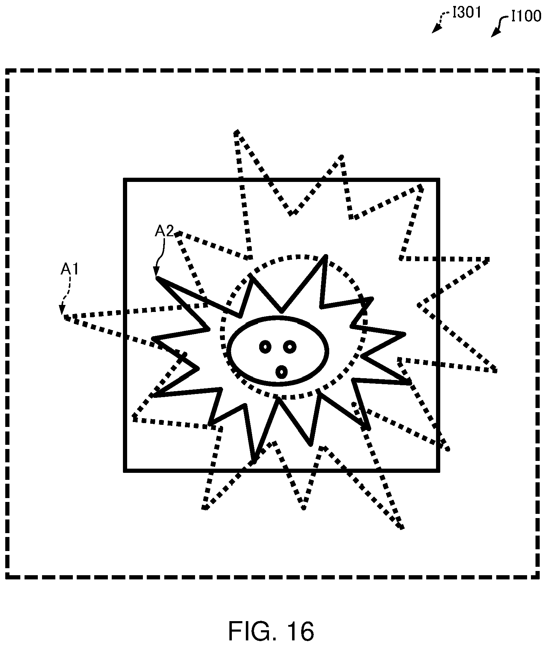

Next, as illustrated in FIG. 16, a feature point to be a reference is respectively selected in the OM image 1301 and the TEM image 1100. The feature point to be a reference is a location having a same specimen position in the OM image I301 and the TEM image I100. In the example illustrated in FIG. 16, a point A1 on the OM image I301 and a point A2 on the TEM image I100 which represents a same specimen position as the point A1 are selected as feature points.

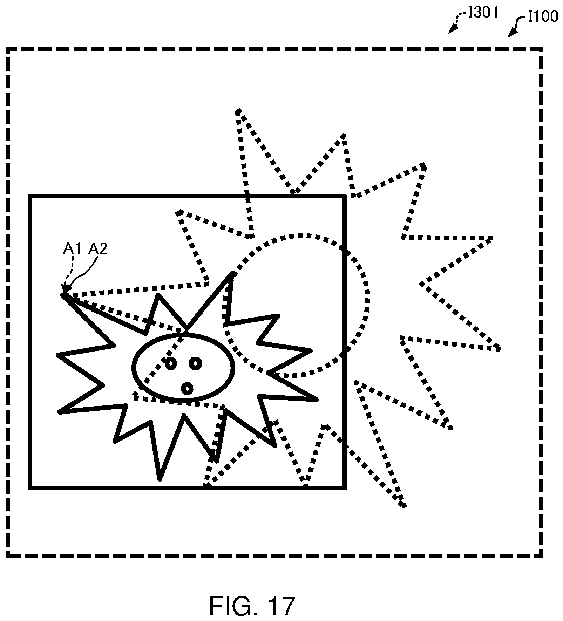

Next, as illustrated in FIG. 17, the OM image I301 is translated to cause the point A1 of the OM image I301 to be superimposed on the point A2 of the TEM image 1100.

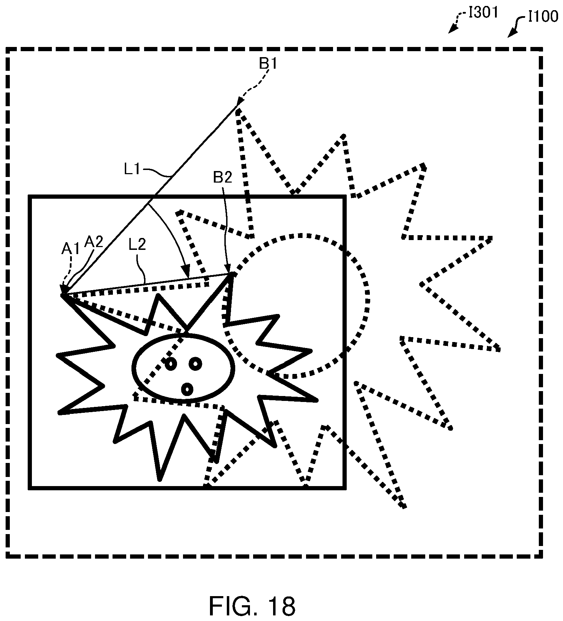

Next, as illustrated in FIG. 18, two feature points to be a reference are respectively selected in the OM image I301 and the TEM image 1100. In the example illustrated in FIG. 18, the point A1 on the OM image I301, the point A2 on the TEM image I100 which represents a same specimen position as the point A1, a point B1 on the OM image I301, and a point B2 on the TEM image 1100 which represents a same specimen position as the point B1 are selected as feature points. In this manner, the point A1 and the point A2 used as feature points when translating the OM image I301 are also selected as feature points in this processing step.

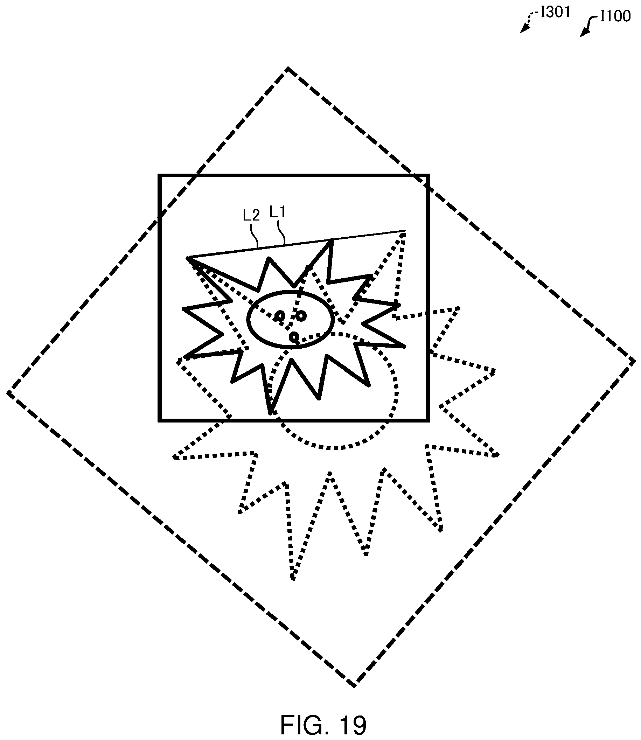

Next, the OM image I301 is rotated around the point A1 to align a straight line L1 connecting the point A1 and the point B1 with a straight line L2 connecting the point A2 and the point B2. Accordingly, as illustrated in FIG. 19, rotation angles of the OM image 1301 can be matched with the TEM image I100.

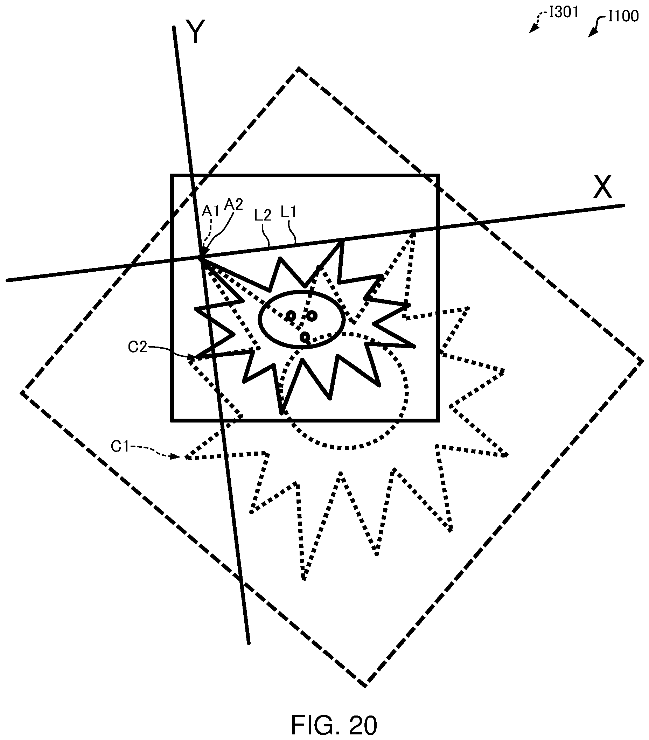

Next, as illustrated in FIG. 20, an axis parallel to the straight line L1 is set as an X axis (a second axis) and an axis orthogonal to the straight line L1 is set as a Y axis (a first axis). An origin where the X axis and the Y axis intersect each other is assumed to be the point A1. Note that the X axis and the Y axis can be arbitrarily set as long as the axes are mutually orthogonal.

Next, two feature points to be a reference are respectively selected in the OM image 1301 and the TEM image 1100. In the example illustrated in FIG. 20, the point A1 (a first point) on the OM image 1301, the point A2 (a second point) on the TEM image 1100 which represents a same specimen position as the point A1, a point C1 (a third point) on the OM image I301, and a point C2 (a fourth point) on the TEM image 1100 which represents a same specimen position as the point C1 are selected as feature points.

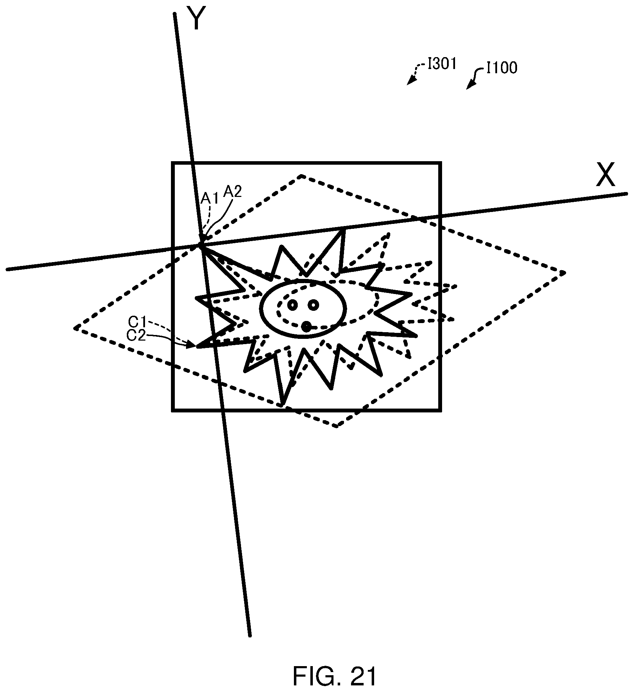

Next, as illustrated in FIG. 21, the OM image I301 is expanded or contracted along the Y axis to cause the point A1 on the OM image I301 to be superimposed on the point A2 on the TEM image 1100, and at the same time, to cause the point C1 on the OM image I301 to be superimposed on the point C2 on the TEM image I100. In the example illustrated in FIG. 21, the OM image 1301 is contracted to cause the point C1 to be superimposed on the point C2 in a state where the point A1 is fixed. As the point C1 and the point C2, points are selected which are superimposed on each other when the OM image 1301 is expanded or contracted in a state where the point A1 is fixed.

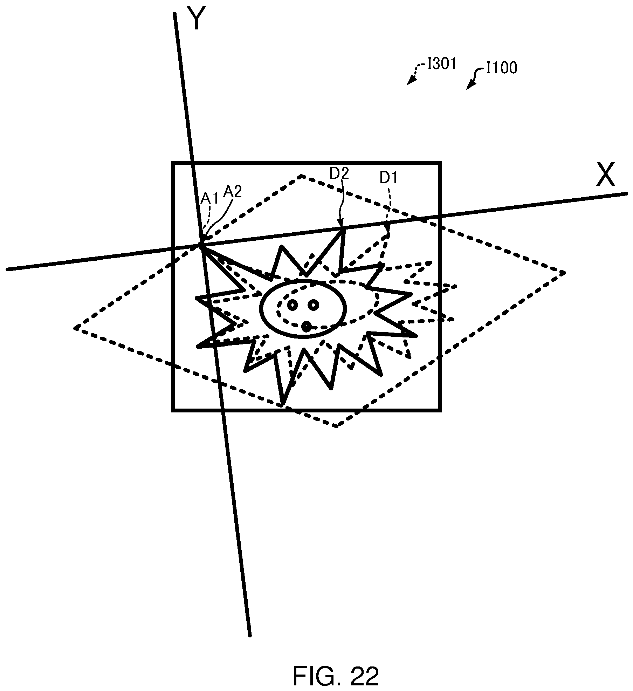

Next, as illustrated in FIG. 22, two feature points to be a reference are respectively selected in the OM image I301 and the TEM image I100. In the example illustrated in FIG. 22, the point A1 (a fifth point) on the OM image I301, the point A2 (a sixth point) on the TEM image I100 which represents a same specimen position as the point A1, a point D1 (a seventh point) on the OM image I301, and a point D2 (an eighth point) on the TEM image I100 which represents a same specimen position as the point D1 are selected as feature points.

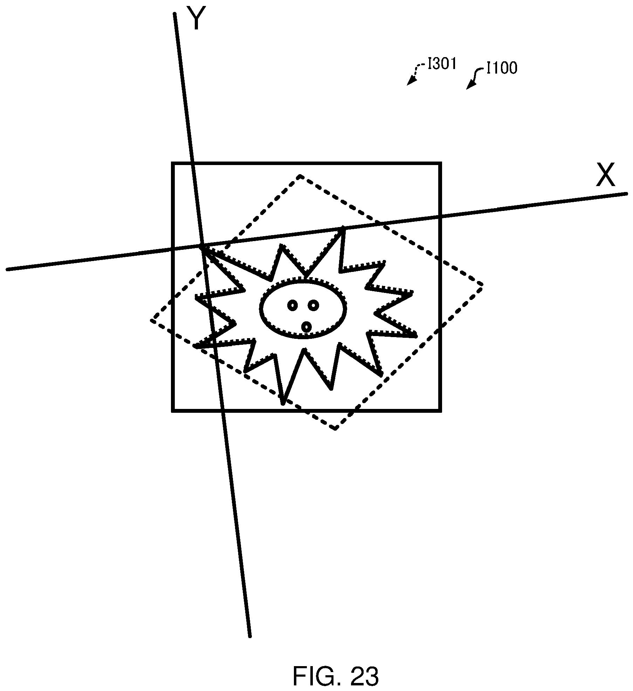

Next, as illustrated in FIG. 23, the OM image I301 is expanded or contracted along the X axis to cause the point A1 on the OM image I301 to be superimposed on the point A2 on the TEM image I100 and, at the same time, to cause the point D1 on the OM image I301 to be superimposed on the point D2 on the TEM image I100. In the example illustrated in FIG. 23, the OM image 1301 is contracted to cause the point D1 to be superimposed on the point D2 in a state where the point A1 is fixed. The point D1 and the point D2 can be set to arbitrary positions as long as the positions represent a same specimen position.

According to the steps described above, an effect of a distortion due to thinning of a specimen can be reduced and an OM image and a TEM image can be displayed in a state of being superimposed on each other.

While the OM image 1301 is first expanded or contracted along the Y axis and subsequently expanded or contracted along the X axis in the description given above, an order of the expansions or contractions is not particularly limited. In addition, an expansion or contraction of the OM image 1301 along the Y axis and an expansion or contraction of the OM image I301 along the X axis can be performed simultaneously.

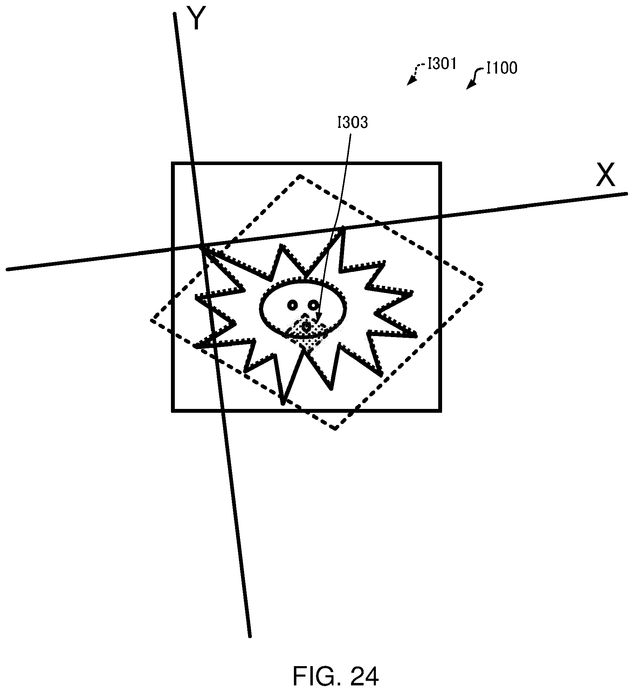

In FIG. 24, in addition to the OM image I301, an OM image 1303 of the same image series I300 is displayed in a state of being superimposed on the TEM image I100. At this point, correction information including a direction of movement and a distance of movement when translating the OM image I301, a rotation angle by which the OM image I301 is rotated, a rate of expansion or contraction of the OM image 1301 along the Y axis, and a rate of expansion or contraction of the OM image I301 along the X axis is also applied to the OM image I303. In other words, the OM image I303 is corrected using the same correction values as the OM image I301 and superimposed on the TEM image I100. In this manner, as long as an OM image belongs to a same image series, the OM image can be corrected based on common correction values.

While the OM image I301 and the OM image I303 are superimposed on the TEM image 1100 in the description given above, the OM image I301 and the OM image I303 can also be superimposed on a live image of a TEM image using a similar method.

### 3. Processing

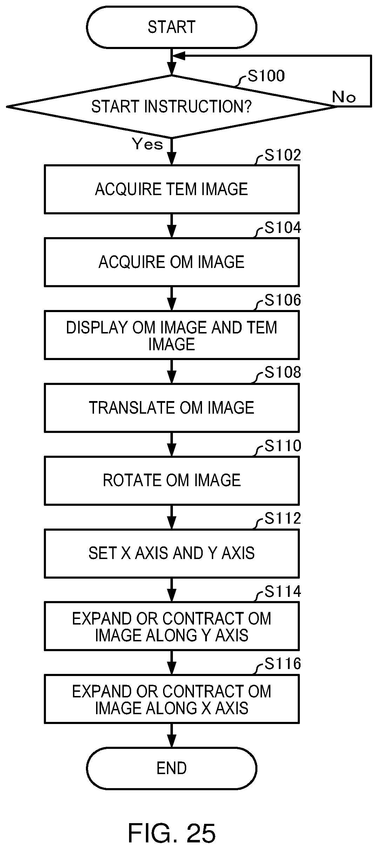

FIG. 25 is a flow chart illustrating an example of processing performed by the processing section 32 of the transmission electron microscope 100. Hereinafter, a case where the TEM image I100 is superimposed on the OM image I301 and displayed on the display section 36 will be described.

First, the processing section 32 determines whether or not a user has issued an instruction (a start instruction) for starting processing to display an OM image and a TEM image in an superimposing manner (S 100). For example, the processing section 32 determines that a start instruction has been issued when a start instruction from the user is input via the operating section 34.

When it is determined that a start instruction has been issued (Yes in S 100), the TEM image acquiring section 320 acquires the TEM image I100 and photographic condition information of the TEM image 1100 stored in the storage section 38 (S102). In addition, the OM image acquiring section 322 acquires the OM image 1301 and photographic condition information of the OM image I301 stored in the storage section 38 (S104).

Next, based on the photographic condition information of the TEM image and the photographic condition information of the OM image, the display control section 324 causes the display section 36 to display the TEM image I100 and the OM image 1301 (S 106). Accordingly, as illustrated in FIG. 15, the TEM image 1100 and the OM image I301 are displayed on the display section 36.

Next, as illustrated in FIG. 16, the display control section 324 acquires coordinate information of the selected point A1 on the OM image I301 and coordinate information of the selected point A2 on the TEM image I100 and, based on the acquired pieces of coordinate information, translates the OM image I301 to cause the point A1 to be superimposed on the point A2 (S 108). Accordingly, as illustrated in FIG. 17, the point A1 is superimposed on the point A2. The display control section 324 causes the storage section 38 to store information on a direction of movement and a distance of movement of the OM image 1301.

Selection of the point A1 and the point A2 is performed by the user by operating the operating section 34 and selecting a point on the TEM image 1100 and a point on the OM image I301 being displayed on the display section 36. By selecting the point A1 and the point A2 via the operating section 34, the user can acquire coordinate information of the point A1 and coordinate information of the point A2.

Alternatively, the selection of the point A1 and the point A2 may be performed by extracting locations of a same specimen position by image processing. A point B1, a point B2, a point C1, a point C2, a point D1, and a point D2 to be described later are selected in a similar manner to the point A1 and the point A2.

Next, as illustrated in FIG. 18, based on the coordinate information of the two selected points (the point A1 and the point B1) on the OM image 1301 and coordinate information of the two selected points (the point A2 and the point B2) on the TEM image I100, the display control section 324 matches rotation angles of the OM image 1301 with the TEM image 1100 (S110).

Based on coordinate information of the point A1 and the point B1, the display control section 324 draws the straight line L1 connecting the point A1 and the point B1, and based on coordinate information of the point A2 and the point B2, the display control section 324 draws the straight line L2 connecting the point A2 and the point B2. Next, the display control section 324 rotates the OM image I301 to align the straight line L1 with the straight line L2. Accordingly, as illustrated in FIG. 19, rotation angles of the OM image 1301 can be matched with the TEM image 1100. The display control section 324 causes the storage section 38 to store information on the rotation angle of the OM image 1301.

The display control section 324 sets an X axis and a Y axis that are two mutually orthogonal axes as illustrated in FIG. 20 (S112). In the example illustrated in FIG. 20, the X axis is set to an axis which is parallel to the straight line L1 and which passes the point A1 and the Y axis is set to an axis which is orthogonal to the X axis and which passes the point A1.

As illustrated in FIG. 21, based on the coordinate information of the two selected points (the point A1 and the point C1) on the OM image I301 and coordinate information of the two selected points (the point A2 and the point C2) on the TEM image I100, the display control section 324 expands or contracts the OM image I301 along the Y axis to cause the point A1 to be superimposed on the point A2 and to cause the point C1 to be superimposed on the point C2 (S114). The display control section 324 causes the storage section 38 to store a rate of expansion or contraction of the OM image 1301 along the Y axis in this step.

As illustrated in FIG. 22, based on the coordinate information of the two selected points (the point A1 and the point D1) on the OM image 1301 and coordinate information of the two selected points (the point A2 and the point D2) on the TEM image 1100, the display control section 324 expands or contracts the OM image 1301 along the X axis to cause the point A1 to be superimposed on the point A2 and to cause the point D1 to be superimposed on the point D2 (S116). The display control section 324 causes the storage section 38 to store a rate of expansion or contraction of the OM image 1301 along the X axis in this step.

According to the processing described above, as illustrated in FIG. 23, the TEM image I100 and the OM image I301 can be displayed in a state of being superimposed on each other on the display section 36.

When displaying an OM image (for example, the OM image 1303) belonging to a same image series as the OM image 1301 by superimposing the OM image I303 on the TEM image I100, the display control section 324 reads correction information stored in the storage section 38 which includes a direction of movement and a distance of movement when translating the OM image 1301, a rotation angle by which the OM image I301 is rotated, a rate of expansion or contraction of the OM image I301 along the Y axis, and a rate of expansion or contraction of the OM image I301 along the X axis and corrects the OM image I303 based on the correction information. Accordingly, OM images of a same image series can be displayed superimposed on a TEM image in an efficient manner.

In other words, for example, in the processing step of correcting distortion, the OM image acquiring section 322 acquires the OM image I303 which is an OM image that differs from the OM image I301 but belongs to the same image series as the OM image I301, and the display control section 324 causes the OM image I303 and the TEM image I100 to be displayed in a state of being superimposed on each other on the display section 36. The display control section 324 distorts the OM image I303 to match a field of view of the OM image I303 with a field of view of the TEM image.

As this point, the display control section 324 expands or contracts the OM image I303 along the Y axis at a same rate of expansion or contraction as the rate of expansion or contraction of the OM image I301 in t expanding or contracting the OM image I301 along the Y axis, and expands or contracts the OM image I303 along the X axis at a same rate of expansion or contraction as the rate of expansion or contraction of the OM image I301 in expanding or contracting the OM image I301 along the X axis.

### 4. Effects

An image processing method according to an embodiment of the invention includes: acquiring an OM image of a specimen; acquiring a TEM image of the specimen having been thinned; superimposing the OM image on the TEM image and causing the display section 36 to display the superimposed images, wherein in superimposing the OM image on the TEM image and causing the display section 36 to display the superimposed images, the OM image is distorted to match a field of view of the OM image with a field of view of the TEM image. Therefore, when superimposing the OM image on the TEM image and displaying the superimposed images, a deviation caused by a distortion of the specimen due to thinning can be reduced.

In addition, in the present embodiment, the OM image is distorted. In this case, the OM image is an image obtained by photographing a specimen prior to thinning and the TEM image is an image obtained by photographing the specimen after being thinned. Therefore, when the TEM image is distorted, there is a large effect on the specimen in a thickness direction and a deviation from an original state of the specimen increases in comparison to a case where the OM image is distorted. Accordingly, in the present embodiment, by distorting the OM image, the OM image can be superimposed on the TEM image and displayed in a state that is closer to the original state of the specimen.

In the image processing method according to the present embodiment, superimposing the OM image on the TEM image and causing the display section 36 to display the superimposed images includes: expanding or contracting the OM image along a first axis (a Y axis) to cause a first point A1 on the OM image to be superimposed on a second point A2 on the TEM image which represents a same specimen position as the first point, and to cause a third point C1 on the OM image to be superimposed on a fourth point C2 on the TEM image which represents a same specimen position as the third point; and expanding or contracting the OM image along a second axis (an X axis) which is orthogonal to the first axis to cause a fifth point A1 on the OM image to be superimposed on a sixth point D1 on the TEM image which represents a same specimen position as the fifth point, and to cause a seventh point A2 on the OM image to be superimposed on an eighth point D2 on the TEM image which represents a same specimen position as the seventh point. Therefore, the OM image can be distorted to match a field of view of the OM image with a field of view of the TEM image.

The image processing method according to the present embodiment includes: acquiring another OM image which belongs to a same image series as the OM image; and superimposing the other OM image on a TEM image and causing the display section 36 to display the superimposed images, wherein in superimposing the other OM image and the TEM image on each other and causing the display section 36 to display the superimposed images, the other OM image is distorted to match a field of view of the other OM image and a field of view of the TEM image with each other. In addition, superimposing the other OM image on a TEM image and causing the display section 36 to display the superimposed images includes: expanding or contracting the other OM image along the Y axis at a rate of expansion or contraction of the OM image in expanding or contracting the OM image along the Y axis; and expanding or contracting the other OM image along the X axis at a rate of expansion or contraction of the OM image in expanding or contracting the OM image along the X axis. Therefore, the other OM image can be readily displayed superimposed on the TEM image.

Furthermore, in the image processing method according to the present embodiment, an observation magnification of an OM image differs from an observation magnification of other OM images. Therefore, for example, after superimposing an OM image with a low magnification on a TEM image, an OM image with a high magnification and the TEM image can be displayed in a state of being superimposed on each other. Accordingly, a specimen can be confirmed at any magnification from low to high.

The invention is not limited to the embodiment described above and various modifications can be further made. For example, the invention includes configurations which are substantially the same as the configurations described in the embodiment. Examples of configurations which are substantially the same include configurations that are the same in function, method, and results. The invention also includes configurations in which non-essential elements described in the embodiment are replaced by other elements. The invention further includes configurations obtained by adding known art to the configurations described in the embodiment.

Some embodiments of the invention have been described in detail above, but those skilled in the art would readily appreciate that many modifications are possible in the embodiments without materially departing from the novel teachings and effects of the invention. Accordingly, all such modifications are intended to be included within the scope of the invention.

## Claims

1. An image processing method comprising:
acquiring an optical microscope image of a specimen;
acquiring a transmission electron microscope image of the specimen having been thinned; and
superimposing the optical microscope image on the transmission electron microscope image and causing a display section to display the superimposed images,
in superimposing the optical microscope image on the transmission electron microscope image and causing the display section to display the superimposed images, the optical microscope image being distorted to match a field of view of the optical microscope image with a field of view of the transmission electron microscope image.

2. The image processing method according to claim 1, wherein
superimposing the optical microscope image on the transmission electron microscope image and causing the display section to display the superimposed images includes:
expanding or contracting the optical microscope image along a first axis to cause a first point on the optical microscope image to be superimposed on a second point on the transmission electron microscope image which represents a same specimen position as the first point, and to cause a third point on the optical microscope image to be superimposed on a fourth point on the transmission electron microscope image which represents a same specimen position as the third point; and
expanding or contracting the optical microscope image along a second axis which is orthogonal to the first axis to cause a fifth point on the optical microscope image to be superimposed on a sixth point on the transmission electron microscope image which represents a same specimen position as the fifth point, and to cause a seventh point on the optical microscope image to be superimposed on an eighth point on the transmission electron microscope image which represents a same specimen position as the seventh point.

3. The image processing method according to claim 2, further comprising:
acquiring another optical microscope image of a same image series as the optical microscope image; and
superimposing the other optical microscope image on the transmission electron microscope image and causing the display section to display the superimposed images, wherein
in superimposing the other optical microscope image on the transmission electron microscope image and causing the display section to display the superimposed images, the other optical microscope image is distorted to match a field of view of the other optical microscope image with a field of view of the transmission electron microscope image, and
superimposing the other optical microscope image on the transmission electron microscope image and causing the display section to display the superimposed images includes:
expanding or contracting the other optical microscope image along the first axis at a rate of expansion or contraction of the optical microscope image in expanding or contracting the optical microscope image along the first axis; and
expanding or contracting the other optical microscope image along the second axis at a rate of expansion or contraction of the optical microscope image in expanding or contracting the optical microscope image along the second axis.

4. The image processing method according to claim 3, wherein
an observation magnification of the other optical microscope image differs from an observation magnification of the optical microscope image.

5. The image processing method according to any one of claims 1 to 4, wherein the transmission electron microscope image is a live image.

6. A transmission electron microscope comprising:
an optical microscope image acquiring section which acquires an optical microscope image of a specimen;
a transmission electron microscope image acquiring section which acquires a transmission electron microscope image of the specimen having been thinned; and
a display control section which superimposes the optical microscope image on the transmission electron microscope image and causes a display section to display the superimposed images,
the display control section distorting the optical microscope image to match a field of view of the optical microscope image with a field of view of the transmission electron microscope image.
